Europäisches Patentamt

European Patent Office

Office européen des brevets

(19)

(11) Veröffentlichungsnummer : **0 427 099 B1**

(12) # EUROPÄISCHE PATENTSCHRIFT

(45) Veröffentlichungstag der Patentschrift :
**15.12.93 Patentblatt 93/50**

(51) Int. Cl.⁵ : **B01D 61/22, C12H 1/06**

(21) Anmeldenummer : **90120861.1**

(22) Anmeldetag : **31.10.90**

(54) **Mikrofiltrationsverfahren.**

(30) Priorität : **04.11.89 DE 3936798**

(43) Veröffentlichungstag der Anmeldung :
**15.05.91 Patentblatt 91/20**

(45) Bekanntmachung des Hinweises auf die
Patenterteilung :
**15.12.93 Patentblatt 93/50**

(84) Benannte Vertragsstaaten :
**AT BE CH DK ES FR GB IT LI NL SE**

(56) Entgegenhaltungen :
**WO-A-89/02708**
**DE-A- 2 002 509**
**DE-A- 3 813 924**

(56) Entgegenhaltungen :
**DE-A- 3 835 672**
**CHEMIE-INGENIEUR-TECHNIK, Band 61, Nr.
6, Juni 1989, Seiten 459-468; T. FAUST et al.:
"Einsatz von Cross-flow-Techniken in der Bioverfahrenstechnik"**

(73) Patentinhaber : **Müller, Wolfgang, Dipl.-Ing.
Winterfeldtstrasse 18
D-44141 Dortmund (DE)**

(72) Erfinder : **Müller, Wolfgang, Dipl.-Ing.
Winterfeldtstrasse 18
D-44141 Dortmund (DE)**

(74) Vertreter : **Andrejewski, Walter, Dr. et al
Patentanwälte Andrejewski, Honke & Partner
Postfach 10 02 54
D-45002 Essen (DE)**

**Beschreibung**

Die Erfindung bezieht sich auf ein Mikrofiltrationsverfahren, insbesondere zum Abtrennen von Bier aus einem beim Gärverfahren ausgeschleusten Stoffstrom, welcher die bei der Gärung entstehende Überschußhefe mitführt, bei dem der zu filtrierende, Trübstoffe enthaltende Stoffstrom unter Druck durch zumindest einen Mikrofiltrationsmodul mit tangential überströmten porösen Membranen hindurchgeführt und ein Filtrat abgezogen wird. Das gattungsgemäße Verfahren arbeitet kontinuierlich, wobei ein aus dem Mikrofiltrationsmodul austretender Retentatstrom im Kreis dem Mikrofiltrationsmodul erneut zugeführt, der zu filtrierende Stoffstrom dem Retentatstrom kontinuierlich zugeführt und ein Konzentratstrom mit einer im wesentlichen konstanten Trübstoffkonzentration aus dem Retentatstrom kontinuierlich abgezogen wird. Wird das Verfahren zur Abtrennung von Bier aus einem Überschußhefe mitführenden Stoffstrom eingesetzt, so bildet Hefe den Trübstoff und wird als Filtrat Bier abgezogen.

Das gattungsgemäße Verfahren ist aus "Brauwelt" 4 (1987) Seiten 118 bis 125 und "Filtration and Separation" (1989) Seiten 198 bis 200 bekannt. Im Rahmen der bekannten Maßnahmen wird mit turbulent durchströmten Rohrbündelmodulen gearbeitet, wobei zumeist mikroporöse Keramikmembranen eingesetzt werden. Die Mikrofiltrationsanlage kann mit einem Wärmeaustauscher ausgerüstet sein, welcher den Retentatstrom kühlt. Die Filtratleitung einer Mikrofiltrationsanlage kann auf einfach Weise dadurch angepaßt werden, daß eine Mehrzahl von Mikrofiltrationsmodulen parallel und in Reihe angeordnet werden (DE-A- 37 00 804). Bei dem gattungsgemäßen Verfahren, bei dem der zu filtrierende Stoffstrom dem Retentatstrom kontinuierlich zugeführt und ein Konzentratstrom mit einer im wesentlichen konstanten Trübstoffkonzentration aus dem Retentatstrom kontinuierlich abgezogen wird, ergibt sich das Problem, daß die Trübstoffkonzentration im Retentatstrom kontinuierlich gemessen werden muß. Trübungs-Messungen und Dichte-Messungen, die grundsätzlich als Meßverfahren in Betracht kommen, sind meßtechnisch aufwendig und störanfällig.

Der Erfindung liegt die Aufgabe zugrunde, das gattungsgemäße Verfahren so weiter auszubilden, daß ein vorgegebener Eindickungsgrad betriebssicher und auf einfache Weise eingestellt werden kann.

Zur Lösung dieser Aufgabe lehrt die Erfindung, daß die Strömungsgeschwindigkeit v und der im Retentatstromkreis sich einstellende Strömungsdruckverlust $\Delta p$ des Retentatstromes gemessen werden, daß die Trübstoffkonzentration des Retentatstromes aus den Meßdaten nach einer apparatecharakteristischen Funktion F, welche die Strömungsgeschwindigkeit und den Strömungsdruckverlust als Variablen enthält, ermittelt sowie mit einem Sollwert verglichen wird und daß nach Maßgabe der sich aus dem Istwert/Sollwert-Vergleich ergebenden Trübstoffkonzentrationsdifferenz der Konzentratstrom mengenmäßig geregelt wird. - Die apparatecharakteristische Funktion F $(v, \Delta p)$ läßt sich anhand weniger Versuche ermitteln. Zweckmäßigerweise wird die Versuchsdurchführung so gestaltet, daß bei konstanter Trübstoffkonzentration der Strömungsdruckverlust in Abhängigkeit der Strömungsgeschwindigkeit experimentell ermittelt und durch eine Funktion der Form

$$\Delta p \simeq v^n$$

mathematisch beschrieben wird. Für die meisten Strömungsformen kann auch auf Strömungsgleichungen zurückgegriffen werden. Für eine turbulente Rohrströmung gilt beispielsweise der funktionsmäßige Zusammenhang

$$\Delta p \simeq v^{7/4}.$$

In einer zweiten Versuchsreihe wird die Trübstoffkonzentration w im relevanten Konzentrationsbereich variiert und bei verschiedenen Trübstoffkonzentrationen Druckverlustmessungen durchgeführt. Trägt man die Ergebnisse in der Form

$$w = F\left(\frac{\Delta p}{v^n}\right)$$

auf, so kann die apparatecharakteristische Funktion F ohne weiteres ermittelt und durch eine Potenzgleichung angenähert werden. Zur Theorie der Zusammenhänge ist anzumerken, daß bei der apparatecharakteristischen Funktion ausgenutzt wird, daß die konzentrationsabhängige Viskositätsänderung im Vergleich zur Dichteänderung vernachlässigbar klein ist. Dies gilt insbesondere für eine turbulente Strömung des Retentatstromes. Eine turbulente Durchströmung der Mikrofiltrationsmodule stellt insofern auch eine bevorzugte Strömungsform dar.

Das erfindungsgemäße Verfahren kann mit Mikrofiltrationsmodulen in Form von Plattenmodulen oder anderen Modularten durchgeführt werden. Vorzugsweise werden jedoch Rohrbündelmodule mit einer Mehrzahl parallel angeströmter Membranrohre eingesetzt. Arbeitet man mit einem Rohrbündelmodul, so ist es vorteilhaft, wenn der Retentatstrom die Membranrohre turbulent durchströmt. In den Membranrohren sollte eine Reynoldszahl im Bereich von 8000 bis 30000 eingestellt werden. Vorzugsweise wird mit einer Reynoldszahl von 10000 bis 20000 gearbeitet. Eine weitere Verbesserung des erfindungsgemäßen Verfahrens kann dadurch erreicht werden, daß das aus dem Mikrofiltrationsmodul ablaufende Filtrat mengenmäßig oder druckmäßig geregelt wird, wobei ein den stationären Betriebszustand charakterisierender Sollwert des Filtratflusses eingestellt wird. Arbeitet man mit einem geregelten Filtratablauf, so ergibt sich an der Membranoberfläche ein äußerst gleichmäßiger Deckschichtaufbau. Es versteht sich, daß diese Maßnahmen insbesondere dann von Bedeutung sind, wenn nach einer Reinigung der Anlage ein neuer Betriebszustand eingestellt wird. Ferner empfiehlt es sich, das Retentat auf eine konstante Temperatur einzustellen. Bei der Abtrennung von Bier aus einem Überschußhefe mitführenden Stoffstrom wird ein hoher Filtratfluß bei gutem Abscheidevermögen erreicht, wenn mit einer konstanten Temperatur im Bereich zwischen 18° und 22° C gearbeitet wird.

Gegenstand der Erfindung ist ferner eine Anlage zur Durchführung des beschriebenen Verfahrens. Zum grundsätzlichen Aufbau dieser Anlage gehören mindestens ein Mikrofiltrationsmodul mit tangential überströmbaren porösen Membranen, eine Umwälzleitung mit Umwälzklappe und eine Filtratleitung, wobei an die Umwälzleitung eine Zuführleitung mit Zuführpumpe sowie eine Konzentratleitung mit Konzentrat-Regelventil angeschlossen sind. Die Anlage ist erfindungsgemäß dadurch gekennzeichnet, daß in der Umwälzleitung eine Meßeinrichtung zur Messung der Strömungsgeschwindigkeit sowie eine Meßeinrichtung mit Meßstellen vor und hinter der Umwälzpumpe zur Messung des Strömungsdruckverlustes angeordnet sind und daß die Meßeinrichtungen sowie das Konzentrat-Regelventil mit einer Steuerungseinrichtung verbunden sind, wobei die Steuerungseinrichtung so ausgebildet ist, daß diese aus den von den Meßeinrichtungen aufgenommenen Meßdaten die Trübstoffkonzentration des in der Umwälzleitung umgepumpten Retentatstromes nach einer apparatecharakteristischen Funktion, welche die Strömungsgeschwindigkeit und den Strömungsdruckverlust als Variablen enthält, ermittelt sowie mit einem Sollwert vergleicht und nach Maßgabe der sich aus dem Istwert/SollwertVergleich ergebenden Trübstoffkonzentrationsdifferenz Steuerungsimpulse an das Konzentrat-Regelventil abgibt. Vorzugsweise ist in der Filtratleitung ein Filtrat-Regelventil angeordnet, mit dem der aus dem Mikrofiltrationsmodul austretende Filtratmengenstrom auf einen den stationären Betriebszustand charakterisierenden Sollwert einstellbar ist. In der Praxis wird die Anlage in der Regel mit einer Mehrzahl von Mikrofiltrationsmodulen betrieben, die in Strömungsrichtung hintereinander und-/oder parallelgeschaltet sind. Auf diese Weise ist ohne weiteres eine Anpassung an die erforderliche Filtratleistung möglich. In manchen Fällen ist es ausreichend, lediglich in einer Filtratablaufleitung ein Filtrat-Regelventil anzuordnen und sämtliche Filtratleitungen an diese Filtratablaufleitung anzuschließen. Eine erfindungsgemäß bevorzugte Anlage ist dadurch gekennzeichnet, daß eine Mehrzahl von in Strömungsrichtung hintereinander angeordneten Mikrofiltrationsmodulen zu Trennsäulen zusammengefaßt sind, wobei mehrere dieser Trennsäulen parallelgeschaltet sind, daß die Filtratleitung der Mikrofiltrationsmodule, die innerhalb der Trennsäule an gleicher Stelle angeordnet sind, miteinander durch die Filtratsammelleitung verbunden sind, und daß die Filtratsammelleitung jeweils mit einem Filtrat-Regelventil ausgerüstet sind. Auf diese Weise wird dem Umstand Rechnung getragen, daß in den hintereinandergeschalteten Filtrationsmodulen ein beachtlicher Strömungsdruckverlust auftritt mit der Folge, daß die transmembrane Druckdifferenz in Strömungsrichtung stark abnimmt und lokal unterschiedliche Filtratflüsse auftreten, wenn nicht besondere Maßnahmen getroffen werden.

Als Mikrofiltrationsmodule kommen vor allem Plattenmodule und Rohrbündelmodule mit einer Mehrzahl anströmbarer Membranrohre in Betracht. Erfindungsgemäß bevorzugt sind Rohrbündelmodule mit mikroporösen Keramikmembranen. Als vorteilhaft hat es sich ferner erwiesen, in der Umwälzleitung einen Wärmeaustauscher anzuordnen.

Die Vorteile der Erfindung sind darin zu sehen, daß das Mikrofiltrationsverfahren zur Abtrennung von Bier aus einem beim Gärverfahren ausgeschleusten Stoffstrom sowie zur Aufkonzentrierung der Überschußhefe in einer raumsparenden Anlage durchgeführt werden kann. Ein großvolumiger Kreislaufbehälter sowie ein Zwischentank sind für die Zwischenlagerung des aufzubereitenden Stoffstromes nicht erforderlich. Dieses erleichtert die Integration des Verfahrens in bestehende Brauereianlagen. Ein weiterer Vorteil besteht darin, daß infolge der stationären Betriebszustände ein gleichmäßiger Deckschichtenaufbau an der Membranoberfläche und eine jederzeit gleichmäßige Filtratqualität gewährleistet ist. Die Einstellung des vorgegebenen Eindickungsgrades ist betriebssicher auf einfache Weise möglich. Da Druckmeßeinrichtungen sowie Meßeinrichtungen zur Ermittlung der Strömungsgeschwindigkeit des Retentatstromes in gattungsgemäßen Anlagen ohnehin üblich sind, ist der meß- und regelungstechnische Aufwand zur Durchführung des erfindungsgemäßen Verfahrens außerordentlich klein. Ähnliche Vorteile ergeben sich auch bei anderen Anwendungsfällen, bei denen Mikrofiltrationsanlagen zur Aufkonzentrierung eines trübstoffhaltigen Stoffstromes eingesetzt werden.

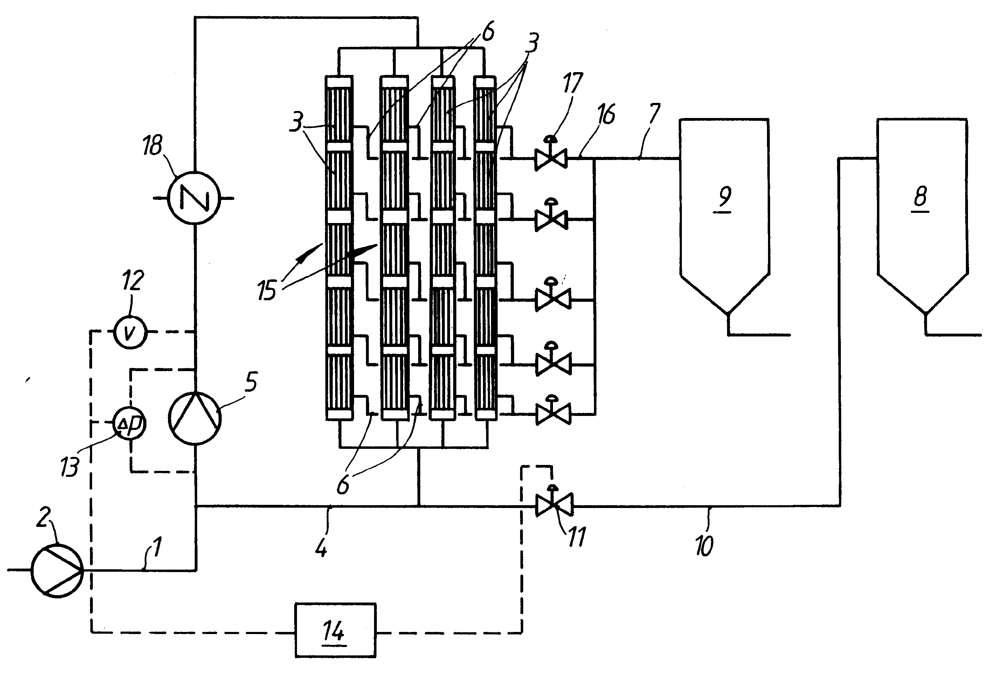

Im folgenden wird die Erfindung anhand einer lediglich ein Ausführungsbeispiel darstellenden Zeichnung ausführlicher erläutert. Die einzige Figur zeigt in schematischer Darstellung das Schema einer Anlage zur Abtrennung von Bier aus einem beim Gärverfahren ausgeschleusten Stoffstromes, welcher die bei der Gärung entstehende Überschußhefe mitführt.

Zum grundsätzlichen Aufbau der Anlage gehören eine Zuführleitung 1 mit Zuführpumpe 2, eine Mehrzahl von Mikrofiltrationsmodulen 3 mit tangential überströmbaren porösen Membranen, eine Umwälzleitung 4 mit Umwälzpumpe 5 sowie eine Mehrzahl von Filtrationsleitungen 6, die an eine gemeinsame Filtratablaufleitung 7 angeschlossen sind. An die Anlage sind Lagertanks 8, 9 für die aufkonzentrierte Überschußhefe sowie das abfiltrierte Bier angeschlossen.

An die Umwälzleitung 4 ist die Zuführleitung 1 und eine Konzentratleitung 10 mit einem Konzentrat-Regelventil 11 angeschlossen. In der Umwälzleitung 4 sind ferner Meßeinrichtungen 12, 13 zur Messung der Strömungsgeschwindigkeit (v) und des Strömungsdruckverlustes (Δp) angeordnet. Die Meßeinrichtungen 12, 13 sowie das Konzentrat-Regelventil 11 sind mit einer Steuerungseinrichtung 14 verbunden, deren Wirkungsweise weiter unten erklärt wird. Mehrere der Mikrofiltrationsmodule 3 sind in Strömungsrichtung hintereinander angeordnet und zu Trennsäulen 15 zusammengefaßt, wobei eine Mehrzahl von Trennsäulen 15 parallelgeschaltet sind. Die Filtratleitungen 6 der Mikrofiltrationsmodule 3, welche innerhalb der Trennsäule 15 an gleicher Stelle angeordnet sind, sind miteinander durch eine Filtratsammelleitung 16 verbunden, der jeweils ein Filtrat-Regelventil 17 zugeordnet ist. Als Mikrofiltrationsmodule 3 werden im Ausführungsbeispiel Rohrbündelmodule mit einer Mehrzahl parallel durchströmter Membranrohre aus mikroporösen Keramikmembranen verwendet. Schließlich erkennt man in der Umwälzleitung 4 einen Wärmeaustauscher 18.

Mit der in der Figur dargestellten Anlage wird das folgende Verfahren ausgeführt: Ein in der Umwälzleitung 4 umgepumpter, mit Überschußhefe angereicherter Retentatstrom wird unter Druck durch die Mikrofiltrationsmodule 3 hindurchgeführt und überströmt mikroporöse Membranen tangential. Aufgrund einer transmembranen Druckdifferenz wird ein von Schwebstoffen befreites Bier - auch als Hefebier bezeichnet - abgetrennt. Das Verfahren arbeitet kontinuierlich. So wird der aus einem nicht dargestellten Gärtank abgezogene Stoffstrom, welcher die bei der Gärung entstehende Überschußhefe mitführt, dem Retentatstrom über die Zuführleitung 1 kontinuierlich zugeführt. Ferner wird ein Konzentratstrom mit einer im wesentlichen konstanten Hefekonzentration aus dem Retentatstrom über die Konzentrationsleitung 10 abgezogen. Die Strömungsgeschwindigkeit v und der Strömungsdruckverlust Δ p des Retentatstromes werden von den in der Umwälzleitung 4 installierten Meßeinrichtungen 12, 13 gemessen und die Meßdaten der Steuerungseinrichtung 14 übermittelt. Zur Messung des Strömungsdruckverlustes Δp werden Meßstellen vorzugsweise vor und hinter der Pumpe angeordnet. Aus den Meßdaten wird die Trübstoffkonzentration des Retentatstromes nach einer apparatecharackteristischen Funktion F (v, Δp), welche die Strömungsgeschwindigkeit v und den Strömungsdruckverlust Δp als Variablen enthält, ermittelt und mit einem Sollwert verglichen. Nach Maßgabe der sich aus dem Istwert/Sollwert-Vergleich ergebenden Trübstoffkonzentrationsdifferenz wird der in der Konzentratleitung 10 abgeführte Konzentratstrom mengenmäßig geregelt. Es versteht sich, daß das Konzentrat-Regelventil 11 bei einem zu niedrigen Istwert geschlossen und bei einem zu hohen Istwert geöffnet wird. Auswertung und Steuerung erfolgen mittels der Steuerungseinrichtung 14.

Der Retentatstrom durchströmt die Membranrohre der Mikrofiltrationsmodule 3 turbulent. Sowohl gute Filtrationsergebnisse als auch eine genaue Einhaltung der vorgegebenen Eindickungsgrade werden erreicht, wenn in den Membranrohren eine Reynoldszahl im Bereich von 8000 bis 30000, vorzugsweise eine Reynoldszahl von 10000 bis 20000, eingestellt wird. Dabei empfiehlt es sich, das Retentat mit konstanter Temperatur, vorzugsweise im Bereich von 18° bis 22° C, umzuwälzen.

Aus das aus den Mikrofiltrationsmodulen 3 ablaufende Filtrat wird mengenmäßig oder druckmäßig geregelt. Zu diesem Zweck sind die Filtratleitungen 6 der Mikrofiltrationsmodule 3, die innerhalb der Trennsäule 15 an gleicher Stelle angeordnet sind, miteinander durch eine Filtratsammelleitung 16 verbunden, die mit einem Filtrat-Regelventil 17 ausgerüstet ist. Die Regelung wird so eingestellt, daß das Filtrat stets mit einem für den stationären Betriebszustand charackteristischen Mengenwert abströmt. Die Filtratregelung greift insbesondere dann ein, wenn die Anlage nach der Reinigung eingefahren wird und auf einen stationären Betriebszustand eingestellt wird.

Beispiel:

Die Mikrofiltrationsmodule sind mit Rohrmembranen aus Keramik ausgerüstet. Der Durchmesser der Membranrohre beträgt 6 mm. Die Porendurchmesser betragen 0,2 μm. Fünf Mikrofiltrationsmodule mit einer Länge von jeweils 85 cm sind zu einer Trennsäule zusammengefaßt. Vier Trennsäulen sind parallelgeschaltet. Der Retentatstrom wird mit einem konstanten Druck von 3 bar mittels einer Kreiselpumpe den Mikrofiltrationsmodulen zugeführt. Die Strömungsgeschwindigkeit ist abhängig von der Trübstoffkonzentration des Retentates. Eine Strömungsgeschwindigkeit von 1,5 m/sec ist bei hohen Trübstoffkonzentrationen ausreichend.

Der beim Gärverfahren ausgeschleuste Stoffstrom hat üblicherweise eine Trübstoffkonzentration von etwa 18 bis 24 Gew.-%. Die Retentattemperatur beträgt 20°C.

**Patentansprüche**

1. Mikrofiltrationsverfahren, insbesondere zum Abtrennen von Bier aus einem beim Gärverfahren ausgeschleusten Stoffstrom, welcher die bei der Gärung entstehende Überschußhefe mitführt, bei dem der zu filtrierende, Trübstoff enthaltende Stoffstrom unter Druck durch zumindest einen Mikrofiltrationsmodul mit tangential überströmten porösen Membranen hindurchgeführt und ein Filtrat abgezogen wird, wobei

ein aus dem Mikrofiltrationsmodul austretender Retentatstrom im Kreis dem Mikrofiltrationsmodul erneut zugeführt wird,

der zu filtrierende Stoffstrom dem Retentatstrom kontinuierlich zugegeben wird und

ein Konzentratstrom mit einer im wesentlichen kon- stanten Trübstoffkonzentration aus dem Retentatstrom kontinuierlich abgezogen wird,

**dadurch gekennzeichnet,** daß die Strömungsgeschwindigkeit (v) und der im Retentatstromkreis sich einstellende Strömungsdruckverlust ($\Delta$ p) des Retentatstromes gemessen werden, daß die Trübstoffkonzentration des Retentatstromes aus den Meßdaten nach einer apparatecharakteristischen Funktion F (v,$\Delta$ p), welche die Strömungsgeschwindigkeit (v) und den Strömungsdruckverlust ($\Delta$p) als Variablen enthält, ermittelt sowie mit einem Sollwert verglichen wird und daß nach Maßgabe der sich aus dem Istwert/Sollwert-Vergleich ergebenden Trübstoffkonzentrationsdifferenz der Konzentratstrom mengenmäßig geregelt wird.

2. Verfahren nach Anspruch 1, wobei als Mikofiltrationsmodul ein Rohrbündelmodul mit einer Mehrzahl parallel angeströmter Membranrohre eingesetzt wird, dadurch gekennzeichnet, daß der Retentatstrom die Membranrohreturbulent durchströmt.

3. Verfahren nach Anspruch 2, dadurch gekennzeichnet, daß eine Reynoldszahl von 8000 bis 30000, vorzugsweise von 10000 bis 20000 in den Membranrohren eingestellt wird.

4. Verfahren nach einem der Ansprüche 1 bis 3, dadurch gekennzeichnet, daß das aus dem Mikrofiltrationsmodul ablaufende Filtrat mengenmäßig oder druckmäßig geregelt wird, wobei ein den stationären Betriebszustand charakterisierender Sollwert des Filtratflusses eingestellt wird.

5. Verfahren nach einem der Ansprüche 1 bis 4, dadurch gekennzeichnet, daß das Retentat auf eine konstante Temperatur, vorzugsweise im Bereich von 18° bis 22 ° C, eingestellt wird.

6. Anlage zur Durchführung des Verfahrens nach einem der Ansprüche 1 bis 5, - mit

mindestens einem Mikrofiltrationsmodul (3) mit tangential überströmbaren porösen Membranen,

einer Umwälzleitung (4) mit Umwälzpumpe (5) und

einer Filtratleitung (6),

wobei an die Umwälzleitung eine Zuführleitung (1) mit Zuführpumpe (2) sowie eine Konzentratleitung (10) mit Konzentrat-Regelventil (11) angeschlossen sind, **dadurch gekennzeichnet,** daß in der Umwälzleitung (4) eine Meßeinrichtung (12) zur Messung der Strömungsgeschwindigkeit (v) sowie eine Meßeinrichtung (13) mit Meßstellen vor und hinter der Umwälzpumpe (5) zur Messung des Strömungsdruckverlustes ($\Delta$ p) angeordnet sind und daß die Meßeinrichtungen (12, 13) sowie das Konzentrat-Regelventil (11) mit einer Steuerungseinrichtung (14) verbunden sind, wobei die Steuerungseinrichtung (14) so ausgebildet ist, daß diese aus den von den Meßeinrichtungen (12, 13) aufgenommenen Meßdaten die Trübstoffkonzentration des in der Umwälzleitung (4) umgepumpten Retentatstromes nach einer apparatecharakteristischen Funktion F (v,$\Delta$ p), welche die Strömungsgeschwindigkeit (v) und den Strömungsdruckverlust ($\Delta$ p) als Variablen enthält, ermittelt sowie mit einem Sollwert vergleicht und nach Maßgabe der sich aus dem Istwert/Sollwert-Vergleich ergebenden Trübstoffkonzentrationsdifferenz Steuerungsimpulse an das Konzentrat-Regelventil (11) abgibt.

7. Anlage nach Anspruch 6, dadurch gekennzeichnet, daß in der Filtratleitung (6) ein Filtrat-Regelventil (17) angeordnet ist, mit dem der aus dem Mikrofiltrationsmodul (3) austretende Filtratmengenstrom auf einen den stationären Betriebszustand charakterisierende Sollwert einstellbar ist.

8. Anlage nach Anspruch 7, dadurch gekennzeichnet, daß eine Mehrzahl von in Strömungsrichtung hintereinander angeordneten Mikrofiltrationsmodulen (3) zu Trennsäulen (15) zusammengefaßt sind, wobei mehrere dieser Trennsäulen (15) parallelgeschaltet sind, daß die Filtratleitungen (6) der Mikrofiltrationsmodule (3), welche innerhalb der Trennsäule (15) an gleicher Stelle angeordnet sind, miteinander durch eine Filtratsammelleitung (16) verbunden sind und daß die Filtratsammelleitung (16) jeweils mit einem Filtrat-Regelventil (17) ausgerüstet sind.

9. Anlage nach einem der Ansprüche 6 bis 8, dadurch gekennzeichnet, daß als Mikrofiltrationsmodul (3) ein Rohrbündelmodul mit einer Mehrzahl parallel anströmbarer Membranrohre, vorzugsweise aus mikroporösen Keramikmembranen, verwendet wird.

10. Anlage nach einem der Ansprüche 6 bis 9, dadurch gekennzeichnet, daß in der Umwälzleitung (4) ein Wärmeaustauscher (18) angeordnet ist.

## Claims

1. A microfiltration process, particularly for the separation of beer from a stream of material obtained during a fermentation process and which carries the surplus yeast arising during fermentation, wherein the stream of material carrying suspended matter and which is to be filtered is passed under pressure through at least one microfiltration module with porous membranes over which the material flows tangentially and a filtrate is drawn off, wherein

   a residue stream emerging from the microfiltration module is recycled to the microfiltration module,

   the stream of material to be filtered is continuously fed to the residue stream, and

   a concentrate stream with a substantially constant suspended matter concentration is continuously drawn off from the residue stream, characterised in that the flow rate (v) and the stream pressure drop ($_\Delta$p) of the residue stream arising in the residue stream circuit are measured, that the suspended matter concentration of the residue stream is determined from the measured data according to a function F (v, $_\Delta$p) which is a characteristic of the apparatus and which contains the flow rate (v) and pressure drop ($_\Delta$p) as variables, and is compared with a set value, and that the concentrate stream is quantitatively controlled according to the difference in the suspended matter concentration obtained from the actual value/set value comparison.

2. A process according to claim 1, wherein a tube bundle with a multiplicity of membrane tubes against which material flows in parallel is used as the microfiltration module, characterised in that the residue stream flows turbulently through the membrane tubes.

3. A process according to claim 2, characterised in that a Reynolds number from 8000 to 30,000, preferably from 10,000 to 20,000, is set in the membrane tubes.

4. A process according to any one of claims 1 to 3, characterised in that the outflowing filtrate from the microfiltration module is controlled according to its quantity or its pressure, wherein a set value for the filtrate flow is set which characterises the steady-state operating situation.

5. A process according to any one of claims 1 to 4, characterised in that the residue is adjusted to a constant temperature, preferably in the range from 18° to 22°C.

6. An installation for carrying out the process according to any one of claims 1 to 5, - with

   at least one microfiltration module (3) with porous membranes over which material can flow tangentially,

   a circulation line (4) with a circulating pump (5), and

   a filtrate line (6),

   wherein a feed line (1) with a feed pump (2) and a concentrate line (10) with a concentrate control valve (11) are connected to the circulation line, characterised in that a measuring device (12) for measuring the flow rate (v) and a measuring device (13) with measurement points upstream and downstream of the circulating pump (5) for measuring the stream pressure drop ($_\Delta$p) are disposed in the circulating line (4), and that the measuring devices (12, 13) and the concentrate control valve (11) are connected to a controller (14), wherein the controller (14) is designed so that it determines the suspended matter concentration in the residue stream pumped round in the circulating line (4) from the measured data recorded by the measuring devices (12, 13) according to a function F (v, $_\Delta$p) which is characteristic of the apparatus and which contains the flow rate (v) and the stream pressure drop ($_\Delta$p) as variables, makes a comparison with a set value, and sends control pulses to the concentrate control valve (11) according to the difference in suspended matter concentration arising from the actual value/set value comparison.

7. An installation according to claim 6, characterised in that a filtrate control valve (17) is disposed in the filtrate line (6), by means of which filtrate control valve the mass flow of filtrate emerging from the microfiltration module (3) can be adjusted to a set value which characterises the steady-state operating situation.

8. An installation according to claim 7, characterised in that a multiplicity of microfiltration modules (3) disposed in series in the direction of flow are combined to form separating columns (15), wherein a plurality of the said separating columns (15) are connected in parallel, that the filtrate lines (6) of the microfiltration modules (3), which are disposed in the same position inside the separating column (15), are connected to each other by a filtrate collection line (16), and that each filtrate collection line (16) is equipped with a filtrate control valve (17).

9. An installation according to any one of claims 6 to 8, characterised in that a tube bundle module with a multiplicity of membrane tubes against which material can flow in parallel and which preferably comprise microporous ceramic membranes, is used as the microfiltration module (3).

10. An installation according to any one of claims 6 to 9, characterised in that a heat exchanger (18) is disposed in the circulation line (4).

**Revendications**

1. Procédé de microfiltration, notamment pour la séparation de la bière à partir d'un écoulement de matière évacuée par éclusage lors d'un procédé de fermentation et qui entraîne conjointement l'excès de levure apparaissant lors de la fermentation, et selon lequel l'écoulement de matière, qui doit être filtré et contient une substance produisant une turbidité, traverse au moins un module de micro-filtration comportant des membranes poreuses, qui sont submergées par débordement tangentiel, et un filtrat est prélevé, et selon lequel un courant de rétentat, qui sort du module de microfiltration, est à nouveau mis en circulation en étant envoyé au module de microfiltration, l'écoulement de matière devant être filtré est ajouté en continu au courant du rétentat, et un écoulement du concentré est prélevé continûment du courant du rétentat, avec une concentration sensiblement constante de la substance produisant une turbidité, caractérisé en ce qu'on mesure la vitesse d'écoulement (v) et la perte de pression d'écoulement ($\Delta p$) , du courant du rétentat, qui se produit dans le circuit du rétentat, qu'on détermine la concentration de la substance produisant la turbidité dans l'écoulement du rétentat à partir des données de mesure conformément à une fonction $F(v, \Delta p)$ caractéristique de l'appareil et qui contient la vitesse d'écoulement (v) et la perte de pression d'écoulement ($\Delta p$) en tant que variable, et on la compare à une valeur de consigne, et que l'écoulement du concentré est réglé quantitativement en fonction de la différence de la concentration de la substance produisant la turbidité, qui résulte de la comparaison valeur réelle/valeur de consigne.

2. Procédé selon la revendication 1, selon lequel on utilise comme module de microfiltration un module à faisceau de tubes comportant une multiplicité de tubes à membranes parcourus par des écoulements parallèles, caractérisé en ce que l'écoulement du rétentat traverse de façon turbulente les tubes à membranes.

3. Procédé selon la revendication 2, caractérisé en ce qu'on règle un nombre de Reynolds compris entre 8000 et 30000 et de préférence entre 10000 et 20000 dans les tubes à membranes.

4. Procédé selon l'une des revendications 1 à 3, caractérisé en ce que le filtrat, qui s'évacue du module de microfiltration, est réglé du point de vue quantitatif ou du point de vue pression, auquel cas on obtient une valeur de consigne de l'écoulement du filtrat, qui caractérise l'état de fonctionnement stationnaire.

5. Procédé selon l'une des revendications 1 à 4, caractérisé en ce qu'on règle le rétentat à une température constante, de préférence dans la gamme de 18° à 22°C.

6. Installation pour la mise en oeuvre du procédé selon l'une des revendications 1 à 5, - comprenant au moins un module de microfiltration (3) comportant des membranes poreuses pouvant être submergées par débordement tangentiel, une conduite de recirculation (4) comportant une pompe de recirculation (5) et une canalisation (6) pour le filtrat, et dans laquelle à la conduite de recirculation sont raccordées une conduite d'alimentation (1) comportant une pompe d'alimentation (2), ainsi qu'une conduite (10) pour le concentré, qui comporte une soupape (11) de régulation du concentré, caractérisée en ce qu'un dispositif (12) pour la mesure de la vitesse d'écoulement (v) ainsi qu'un dispositif de mesure (13) comportant des points de mesure en amont et en aval de la pompe de recirculation (5) pour la mesure des pertes de pression d'écoulement ($\Delta p$) sont disposés dans la conduite de recirculation (4), que les dispositifs de mesure (12,13) ainsi que la soupape (11) de régulation du concentré sont raccordés à un dispositif de commande (14), le dispositif de commande (14) étant agencé de telle sorte que ce dernier détermine, à partir des données de mesure enregistrées par les dispositifs de mesure (12,13), la concentration de la substance provoquant la turbidité dans l'écoulement du rétentat, entraîné par pompage en recirculation dans la conduite de recirculation (4), selon une fonction $F(v, \Delta p)$ caractéristique de l'appareil et qui contient, en tant que variables, la vitesse d'écoulement (v) et la perte de pression d'écoulement ($\Delta p$), et compare ces données à une valeur de consigne et, en fonction de la différence de concentration de la substance provoquant la turbidité, qui résulte de la comparaison valeur réelle/valeur de consigne, envoie des impulsions de commande à la soupape (11) de régulation du concentré.

7. Installation selon la revendication 6, caractériséeen ce que dans la conduite (6) prévue pour le filtrat est disposée une soupape (17) de régulation du filtrat, au moyen de laquelle le débit du filtrat, qui sort du module de microfiltration (3), peut être réglé sur une valeur de consigne qui caractérise l'état de fonctionnement fixe.

8. Installation selon la revendication 7, caractérisée en ce qu'une multiplicité de modules de microfiltration (3) disposés en aval dans la direction d'écoulement, sont réunis pour former des colonnes de séparation (15), plusieurs de ces colonnes de séparation (15) étant branchées en parallèle, que les conduites (6) pour le filtrat des modules de microfiltration (3), qui sont disposées au même emplacement à l'intérieur de la colonne de séparation (15), sont reliées entre elles par l'intermédiaire d'une canalisation (16) de collecte du filtrat et que les canalisations (16) de collecte du filtrat sont équipées respectivement d'une soupape (17) de régulation du filtrat.

9. Installation selon l'une des revendications 6 à 8, caractérisée en ce qu'on utilise, comme module de microfiltration (3), un module de faisceaux de tubes comportant une multiplicité de tubes à membranes, qui peuvent être parcourus en parallèle par l'écoulement et sont constitués de préférence par des membranes céramiques microporeuses.

10. Installation selon l'une des revendications 6 à 9, caractérisée en ce qu'un échangeur de chaleur (18) est disposé dans la conduite de recirculation (4).